# EUROPEAN PATENT SPECIFICATION

(11) **EP 2 283 989 B1**
(45) Date of publication and mention of the grant of the patent: **28.11.2012**
(21) Application number: 09447035.8
(22) Date of filing: 06.08.2009
(51) Int. Cl.: B29C 47/00

(54) **Production method for the manufacturing of very thin monolithic layers of thermoplastic polyurethane**
Herstellungsverfahren zur Herstellung sehr dünner monolithischer Schichten aus thermoplastischem Polyurethan
Procédé de fabrication de couches monolithiques très minces de polyuréthane thermoplastique

(43) Date of publication of application: 16.02.2011
(73) Proprietor: Mondi Belcoat, Naamloze Vennootschap, 2570 Duffel (BE)
(72) Inventor: van Edom, Bart René Jos, 3271 Scherpenheuvel-Zichem (BE); Boeykens, Ivan, 2170 Merksem (BE); Vanhoof, Mieke, 2600 Merchem (BE)
(74) Representative: Donné, Eddy

(56) References cited:
- US-A- 4 291 099
- US-A1- 2002 007 903
- US-B1- 6 620 472
- DATABASE WPI Week 200023 Thomson Scientific, London, GB; AN 2000-260134 XP002576552 -& JP 2000 062125 A (TOYO RUBBER IND CO LTD) 29 February 2000 (2000-02-29)
- DATABASE WPI Week 200418 Thomson Scientific, London, GB; AN 2004-183955 XP002576553 -& JP 2003 285359 A (DU PONT TORAY CO LTD) 7 October 2003 (2003-10-07)
- DATABASE WPI Week 199903, Derwent Publications Ltd., London, GB; AN 1999-029152, XP002576554 -& JP 10 292103 A (KURARAY CO LTD) 04 November 1998

## Description

The present invention relates to a production method for the manufacturing of very thin monolithic layers of thermoplastic polyurethane.

Thermoplastic polyurethane (TPU) combines a high resistance to UV irradiation and a high resistance to mechanical wear and tear with impermeability for water and gases, when applied in thin layers and this for several application domains.

Monolithic layers of TPU are traditionally obtained by coating from solvent, or by extrusion techniques whereby TPU is coextruded onto a carrier material or substrate.

A disadvantage of the known production method of coating TPU from solvent is that this production method is expensive and environmentally unfriendly.

A disadvantage of monolithic layers of TPU is that they are not very permeable to water vapor unless their thickness is reduced to very thin layers of less than 100 micrometer thickness. It is a purpose of the present invention to obtain very thin layers of TPU with a water vapor transmission ratio of 600-4000 g/m2/day so as to obtain a breather membrane.

Another disadvantage of monolithic layers of TPU is that the material cost of these layers is relatively high, since PU is an expensive chemical, and since the line speeds obtained by conventional extrusion or extrusion lamination are limited and do not exceed 100 m/min

US 2002/0007903 describes an extrusion coating process for making protective and decorative films on a carrier sheet traveling past the extruder die opening. The film can be a solid polymeric film without solvent and is produced by melting the extrudable polymeric starting material and coating it on a substrate through a die with a narrow slot to form a thin low viscosity coating of a melt of uniform thickness of 2.5 µ to 75 µ. The film can consist of a wide range of possible polymeric materials amongst which a polyurethane. Line speeds of 200 feet per minute (or 61 meter per minute) are achieved. This patent application relates to liners for automotive parts and is not aimed at obtaining breather membranes with water vapor transmission ratios of 600-4000 g/m2/day.

US 6.620.472 describes the lamination of barrier membranes consisting of a first layer of a thermoplastic polyurethane and a second layer of a copolymer of ethylene and vinyl alcohol, wherein the melt temperature of the TPU layers should be between about 360°F to about 465°F. The combined laminar melt streams are then formed into a single rectangular extruded melt in the sheet die which preferably has a "coat hanger" design, whereafter the extrudate can be cooled utilizing rollers forming a rigid sheet. The layer of thermoplastic polyurethane will typically have an average thickness of at least 10 µ. Line speeds are not specified in this application since the film is shaped into bladders.

US 4.291.099 describes a method for making laminates by coextrusion between a thermoplastic polyurethane and a polyvinylidene fluoride, despite the well-known lack of adhesion between fluorine-containing resins and the majority of extrudable polymers such as polyurethanes.

This is achieved by using both polymers at a certain specified specific viscosity in a lamination process. The thickness of the polyurethane film was 350 µ, and 150 µ for the fluorine-containing resin. Line speeds were not mentioned.

JP 2.000.062.125 describes a method for manufacturing a laminated sheet of a thermoplastic urethane film with a thickness of 8 to 30 µ, by laminating it on a non woven fabric while the urethane film is formed. Line speeds of 30 to 100 m/min are obtained. The polyurethane thickness is obtained by extruding from a die lip with a 500 to 600 µ gap.

JP 2.003.285.359 describes a manufacturing apparatus for making a composite film containing a thermoplastic resin layer which can consist of polyurethane. The composite film is intended for large airships or balloons. The method involves insertion by lamination extrusion of a melting thin film of thermoplastic resin between fiber textile and another film having a preset helium gas-permeability. Line speeds are not specified.

JP 10.292.103 describes an extrusion lamination process in which a polyurethane containing layer is foamed by adding a blowing agent.

The present invention aims at countering the limited line speeds of conventional extrusion coating and lamination by enabling the production of very thin films of TPU by an appropriate production method.

To this end, a production method for the manufacturing of very thin monolithic layers of thermoplastic polyurethane (TPU)being permeable to water vapor with a transmission ratio for water vapor of 600-4000 g/m2/day is used, whereby the TPU is extruded or extrusion coated and/or laminated with an extrusion head with a mouth opening of 0.60 mm, whereby the extrusion speed in the line is held between 50 m/min and 200 m/min, and preferably at 100 m/min, and whereby the extruder head temperature is held between 150 °C and 270 °C, and preferably at 175 °C, and whereby the extruder compression ratio is held between 3.0 and 3.8, and preferably at 3.5, and whereby the pressing pressure of the extruder is kept between 10 bar and 80 bar, and preferably at 40 bar, and whereby the extruded layer of TPU is fused to a substrate layer by means of an extrusion coater whereby the molten polymer flows as a relatively thick film from the extrusion head and is, in the distance from the extruder head to the nip, stretched to the very thin thickness of 30 to 60 micrometer and is subsequently fused by a pressure roller backed by another roller to a substrate, supported by a guidance roller, onto one side of the molten polymer layer whereby a cooling roller exerts counter pressure and cools and hardens the molten film, and after which the finished product leaves the production process supported by another guidance roller.

The high line speed and the other extrusion parameters result in the prevention of polymer chain scission which prevents layer breakage and disintegration which would normally be expected for these very thin layers, so that a stable monolithic and continuous very thin layer of TPU is formed with a thickness of 30 to 60 micrometer.

Another advantage of these very thin layers of TPU is that the cost of the PU chemical is reduced due to the very low thickness.

Another advantage of the very thin layers of monolithic TPU produced in this way is that they do not show discontinuities in the layer and as such can be incorporated into products.

Another advantage of these very thin monolithic layers of TPU is that their resistance to UV irradiation and to mechanical wear remains intact.

With the intention to better show the features of the invention a preferred embodiment is described of an extrusion equipment for the production of very thin TPU layers according to the invention, with reference to the accompanying figures, wherein :
Figure 1 schematically represents a frontal view of an extrusion head used to produce very thin layers of TPU according to the invention;
figure 2 represents a cross section according to line II- II of figure 1;
figure 3 schematically represents a cross section of an extrusion coating equipment using the extrusion head of figures 1 and 2;
figure 4 schematically represents a cross section of an extrusion lamination equipment using the extrusion head of figures 1 and 2.

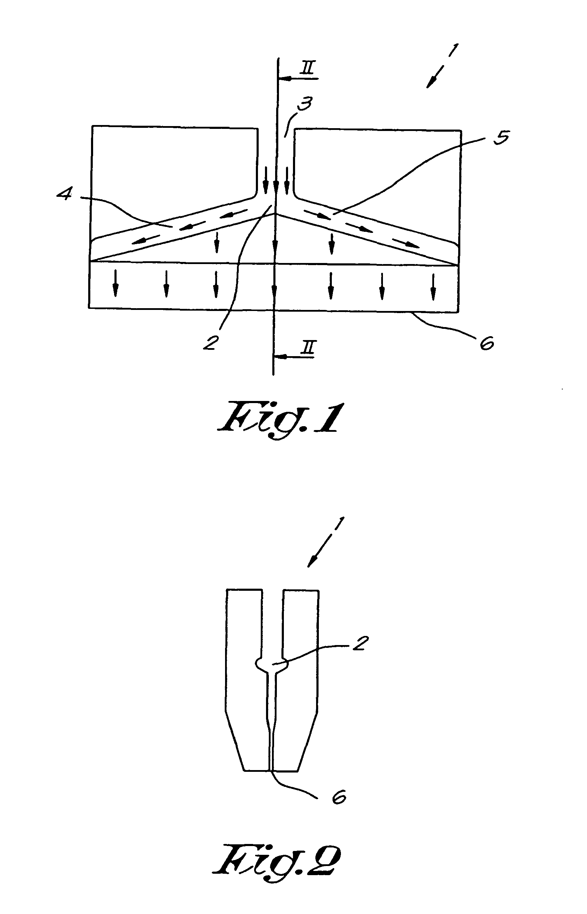

The extrusion head represented in figures 1 and 2 is of a known type with a distribution chamber 2 in the shape of a coat hanger with an inlet 3 for molten polymer and two branches 4,5 which are slanting down and which are communicating with an outlet in the shape of a thin narrow slit 6 extending over the width of the coat hanger type distribution chamber 2 of the extrusion head 1.

The functioning of the extrusion head 1 in figure 1 is simple and as follows. The thermoplastic polyurethane (TPU) is molten in the extrusion head 1 at a temperature of between 150 °C and 270 °C and more preferably of 175 °C, after which the polymer is guided through the inlet 3 of the distribution chamber 2 of the coat hanger extrusion head 1, and subsequently through the coat hanger shaped arms 4,5 of the distribution chamber 2.

The polymer is subsequently guided as a very thin layer through the extrusion mouth with an adjustable die 6 that has been adjusted to a die opening of 600 micrometer.

The extrusion speed of the polymer through the extrusion head has to be sufficiently high, namely between 50 to 200 m/min, and most preferably of 100 m/min as measured at the counter cooling roller 11.

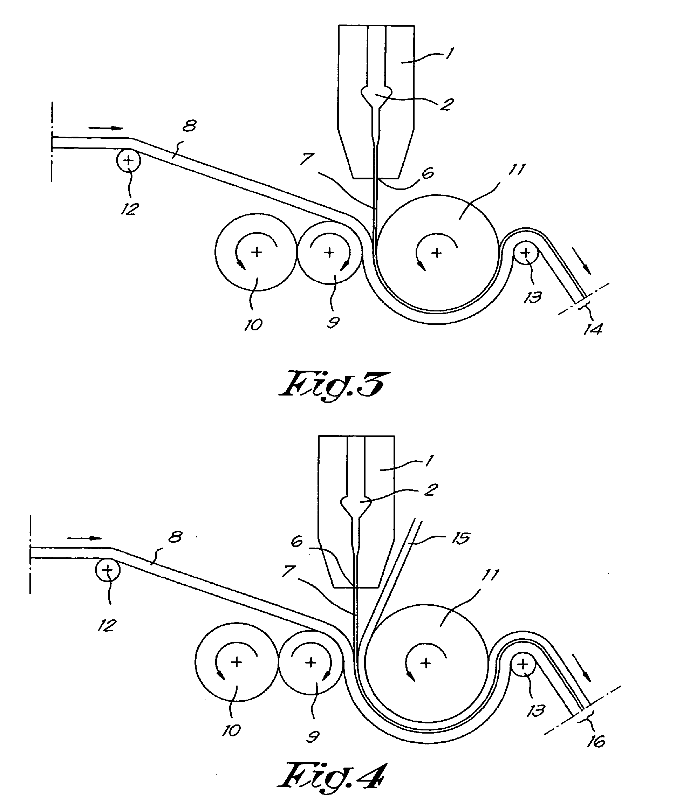

In figure 3 an extrusion coater is represented with an extrusion head 1 and a molten polymer 7, a substrate 8 and a pressure roller 9 with a back-up roller 10, a cooling counter pressure roller 11 and guidance rollers 12 and 13 as used in the manufacturing of a very thin TPU based product 14 according to the invention.

The functioning of the extrusion coater in figure 3 can be explained as follows. The molten polymer 7 flows as a relatively thick film from the extrusion head 1 and is, in the distance from the extruder head to the nip, stretched to the very thin thickness of 8 to 100 micrometer, preferably of 30 to 60 micrometer. The film is then fused by a pressure roller 9 backed by another roller 10 to a substrate 8, supported by a guidance roller 12, onto one side of the molten polymer layer 7 whereby a cooling roller 11 exerts counter pressure and cools and hardens the molten film, after which the finished product 14 leaves the production process supported by another guidance roller 13.

In figure 4 an extrusion laminator is represented with an extrusion head 1 and a molten polymer 7, two substrate layers 8 and 15, a pressure roller 9 with back-up roller 10, a cooling counter pressure roller 11 and guidance rollers 12 and 13 as used in the manufacturing of a very thin TPU based laminated product 16 according to the invention.

The functioning of the extrusion laminator in figure 4 can be explained as follows. The molten polymer 7 flows as a relatively thick film from the extrusion head 1 and is, in the distance from the extruder head to the nip, stretched to the very thin thickness of 30 to 60 micrometer. The film is then fused by the pressure roller 9 onto two substrates 8 and 15, on both sides of the molten polymer layer 7 whereby a cooling roller 11 exerts counter pressure and cools and hardens the molten film, after which the finished product 16 leaves the production process, supported by guidance roller 13.

The substrates 8,15 coated with a very thin TPU layer can be diverse : porous or nonporous materials, woven or nonwoven polymer, fibers and filaments, film, metalized film, aluminum, paper, scrim, glass fiber tissue, textile and other materials.

These breather membrane materials, containing a very thin TPU layer find applications in many domains: building, clothing, technical textiles, medical cover sheets, mattress protection, personal hygiene products.

## Claims

1. Production method for the manufacturing of very thin monolithic layers of thermoplastic polyurethane (TPU) being permeable to water vapor with a transmission ratio for water vapor of 600-4000 g/m2/day, wherein the TPU is extruded or extrusion coated and/or laminated with an extrusion head (1) with a mouth opening (6) of 0.60 mm, whereby the extrusion speed in the line (6) is held between 50 m/min and 200 m/min, and preferably at 100 m/min, and whereby the extruder head (1) temperature is held between 150 °C and 270 °C, and preferably at 175 °C, and whereby the extruder compression ratio is held between 3.0 and 3.8, and preferably at 3.5, and whereby the pressing pressure of the extruder is kept between 10 bar and 80 bar, and preferably at 40 bar, and in that the extruded layer of TPU (7) is fused to a substrate layer (8) by means of an extrusion coater whereby the molten polymer flows as a relatively thick film from the extrusion head (1) and is,
in the distance from the extruder head to the nip, stretched to the very thin thickness of 30 to 60 micrometer and is subsequently fused by a pressure roller (9) backed by another roller (10) to a substrate (8), supported by a guidance roller (12), onto one side of the molten polymer layer (7) whereby a cooling roller (11) exerts counter pressure and cools and hardens the molten film, and after which the finished product (14) leaves the production process supported by another guidance roller (13).

## Patentansprüche

1. Herstellungsverfahren zur Herstellung sehr dünner monolithischer Schichten aus thermoplastischem Polyurethan (TPU), die für Wasserdampf durchlässig sind, mit einem Übertragungsverhältnis für Wasserdampf von 600-4000 g/m²/Tag, wobei das TPU mit einem Extrusionskopf (1) mit einer Düsenöffnung (6) von 0,60 mm extrudiert oder extrusionsbeschichtet und/oder laminiert wird, wobei die Extrusionsgeschwindigkeit in der Linie (6) zwischen 50 m/min und 200 m/min und bevorzugt auf 100 m/min gehalten wird, und wobei die Temperatur des Extrusionskopfs (1) zwischen 150°C und 270°C und bevorzugt auf 175°C gehalten wird, und wobei das Extruderkompressionsverhältnis zwischen 3,0 und 3,8 und bevorzugt auf 3,5 gehalten wird, und wobei der Pressdruck des Extruders zwischen 10 bar und 80 bar und bevorzugt auf 40 bar gehalten wird, und wobei die extrudierte Schicht von TPU (7) mittels eines Extrusionsbeschichters auf eine Substratschicht (8) geschmolzen wird, wobei das geschmolzene Polymer als relativ dicker Film aus dem Extrusionskopf (1) fließt und, in dem Abstand von dem Extruderkopf zum Walzenspalt, auf die sehr dünne Dicke von 30 bis 60 Mikrometer gedehnt wird und danach durch eine Druckwalze (9), die durch eine andere Walze (10) unterstützt wird, auf ein durch eine Führungswalze (12) getragenes Substrat (8) geschmolzen wird, an einer Seite der geschmolzenen Polymerschicht (7), wobei eine Kühlwalze (11) Gegendruck ausübt und den geschmolzenen Film kühlt und härtet, und wonach das Fertigprodukt (14), getragen durch eine andere Führungswalze (13), den Herstellungsvorgang verlässt.

## Revendications

1. Procédé de production pour la fabrication de couches monolithiques très minces de polyuréthane thermoplastique (TPU) perméable à la vapeur d'eau avec un rapport de transmission pour la vapeur d'eau de 600 à 4000 g/m²/jour, dans lequel on soumet le TPU à une extrusion ou à une enduction et/ou une stratification par extrusion avec une tête d'extrusion (1) comportant une ouverture d'embouchure (6) de 0,60 mm, la vitesse d'extrusion dans la ligne (6) étant maintenue entre 50 m/min et 200 m/min, et de préférence à 100 m/min, et la température de la tête de l'extrudeuse étant maintenue entre 150 °C et 270 °C et de préférence à 175 °C, et le rapport de compression de l'extrudeuse étant maintenu entre 3,0 et 3,8, de préférence à 3,5, et la pression de compression de l'extrudeuse étant maintenue entre 10 bar et 80 bar et de préférence à 40 bar, et dans lequel la couche extrudée du TPU (7) est fusionnée à une couche de substrat (8) au moyen d'un dispositif d'enduction par extrusion, le polymère en fusion s'écoulant sous la forme d'un film relativement épais à partir de la tête (1) de l'extrudeuse et étant étiré, sur la distance s'étendant entre la tête de l'extrudeuse et la ligne de contact, pour obtenir une épaisseur très mince de 30 à 60 µm, et étant ensuite fusionné, à l'aide d'un cylindre presseur (9) conjugué à un autre cylindre (10), à un substrat (8) supporté par un cylindre de guidage (12) sur un côté de la couche polymère en fusion (7), un cylindre de refroidissement (11) exerçant une contrepression pour refroidir et durcir le film en fusion, et après quoi le produit fini (14) quitte le processus de production en étant supporté par un autre cylindre de guidage (13).
